# EUROPEAN PATENT SPECIFICATION

(11) **EP 3 779 659 B1**
(45) Date of publication and mention of the grant of the patent: **01.04.2026**
(21) Application number: 19191741.8
(22) Date of filing: 14.08.2019
(51) Int. Cl.: G06F 3/0484, G06F 3/0487, G06Q 20/20, G06Q 20/18, G07G 1/00, G07F 9/02, A47F 1/04, A47F 9/04

(54) **SELF-CHECKOUT TERMINAL, METHOD AND NON-TRANSITORY COMPUTER-READABLE MEDIUM**
SELBSTBEDIENUNGSENDGERÄT, VERFAHREN UND NICHTTRANSITORISCHES COMPUTERLESBARES MEDIUM
TERMINAL DE CAISSE EN LIBRE-SERVICE, PROCÉDÉ ET SUPPORT LISIBLE PAR ORDINATEUR NON TRANSITOIRE

(43) Date of publication of application: 17.02.2021
(73) Proprietor: Diebold Nixdorf Systems GmbH, 33106 Paderborn (DE)
(72) Inventor: WIDMAIER, Dominik, 10715 Berlin (DE)

(56) References cited:
- EP-A1- 1 860 621
- EP-A1- 3 293 693
- EP-A1- 3 514 772
- AU-A1- 2007 202 349
- DE-A1- 102011 055 051
- DE-C1- 4 421 067
- US-A1- 2005 178 831
- US-A1- 2018 084 227
- US-B1- 10 089 614
- US-B1- 10 192 208

## Description

### Technical Field

Various aspects relate generally to a self-checkout terminal, a method, and non-transitory computer-readable medium.

### Background

In many traditional retail markets, a self-checkout terminal provides the possibility for a customer to scan the desired products by himself (e.g., unassisted) as an alternative to scan the products by a cashier. Such a checkout terminal provides for a faster checkout, more anonymity for the customer and less personnel costs for the retail market. Using a self-checkout terminal, each customer, rather than the cashier, scans the bar codes of the products to be purchased.

A general issue of a retail market is the risk of fraud for products with a high value or highly desired products. Thus, such products are generally stored separately, e.g., within secured areas, containers or the like, and thus require assistance by employees of the retail market to be purchased. For example, cigarettes are stored at regular cashier-operated checkouts in locked vending machines, which have to be unlocked by the cashier to provide the cigarettes. Such type of a manual unlock mechanisms are not suitable at self-checkout terminals, as the cashier is absent. To replace the cashier, a regular vending machine may communicate with a self-checkout terminal. Like the locked vending machine, the regular vending machine stores the products in a secured container and the customer has to instruct the regular vending machine to eject one of the products from the secured container. In response, the regular vending machine informs the self-checkout terminal that the product ejected from the regular vending machine invoices.

However, storing a product in a secured area obstructs the potential to present the product to the customer. Assistance by the employees is time consuming. Likewise, the regular vending machine is not capable to take back a product, e.g., if it does not meet the customers' expectations. Such circumstances prevent the customer from buying such a product.

EP 3 293 693 A1 describes a self-service checkout terminal having scales that monitor the weight increment and decrement when objects are moved from on scale to the other. US 2005/178831 A1 describes a regular check-out counter having a dispensing device for cigarettes, which is instructed to dispense cigarettes by a control panel. EP 1 860 621 A1 and DE 10 2011 055051 A1 relate to a cashier based checkout. US 10 089 614 B1 describes a self-checkout system, which has a programming configured to allow an item to be scanned by a product identification scanner and in communication with the exceptions processing subsystem. Relevant prior art includes AU 2007 202 349 A1, which discloses a self-service device for the removal and supply of packaged goods in supermarkets or similar sales premises.

### Brief Description of the Drawings

Throughout the drawings, it should be noted that like reference numbers are used to depict the same or similar elements, features, and structures. The drawings are not necessarily to scale, emphasis instead generally being placed upon illustrating aspects of the disclosure. In the following description, some aspects of the disclosure are described with reference to the following drawings, in which:
FIGS. 1 to 10 show each a self-checkout terminal according to various aspects in a schematic diagram;
FIG. 11 shows a scheme in a schematic flow diagram for operating a self-checkout terminal according to various aspects;
FIG. 12 shows multiple self-checkout terminals according to various aspects in a schematic perspective view; and
FIG. 13 shows a self-checkout system according to various aspects in a schematic diagram.

### Description

The following detailed description refers to the accompanying drawings that show, by way of illustration, specific details and aspects in which the disclosure may be practiced. One or more aspects are described in sufficient detail to enable those skilled in the art to practice the disclosure. Other aspects may be utilized and structural, logical, and electrical changes may be made without departing from the scope of the disclosure. The various aspects are not necessarily mutually exclusive, as some aspects can be combined with one or more other aspects to form new aspects. Various aspects are described in connection with methods and various aspects are described in connection with devices. However, it may be understood that aspects described in connection with methods may similarly apply to the devices, and vice versa. Throughout the drawings, it should be noted that like reference numbers are used to depict the same or similar elements, features, and structures.

The present disclosure may include various processes (e.g., sequences). The processes may be performed by hardware components or may be embodied in computer-readable instructions, which may be used to cause a general purpose or special purpose processor or logic circuits programmed with the instructions to perform the processes. Alternatively, the processes may be performed by a combination of hardware and software.

The term "processor" as, for example, used herein may be understood as any kind of entity that allows handling data, signals, as examples. The data, signals, as example, may be handled according to one or more specific functions executed by the processor.

A processor may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), as examples, or any combination thereof. Any other kind of implementation of the respective functions, which will be described below in further detail, may also be understood as a processor or logic circuit. It is understood that any two (or more) of the processors or logic circuits detailed herein may be realized as a single entity with equivalent functionality, and conversely that any single processor or logic circuit detailed herein may be realized as two (or more) separate entities with equivalent functionality. It is understood that one or more of the method steps detailed herein may be performed (e.g., realized) by a processor, may by one or more specific functions executed by the processor.

The term "control device" (also referred as to controller) may be understood as any kind of a logic implementing entity, which may be special purpose circuitry or a processor executing software stored in a memory, firmware, or any combination thereof. Thus, a "control device" may include a hard-wired logic circuit or a programmable logic circuit such as a programmable processor, e.g. a microprocessor (e.g. a Complex Instruction Set Computer (CISC) processor or a Reduced Instruction Set Computer (RISC) processor). A "control device" may, additionally or alternatively, include one or more processors executing software or at least code segments, e.g. any kind of computer program, e.g., a computer program using a virtual machine code such as e.g., Java.

The control device may optionally include a memory, e.g., storing code segments that represent the processes provided by the control device, e.g., the controlling of the one or more operating functions. Additionally or alternatively, the memory may store one or more criterion, rules, and algorithms, as examples, as detailed herein.

As used herein, "memory" may be understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, as examples, or any combination thereof. Furthermore, it is appreciated that registers, shift registers, processor registers, data buffers, as examples, are also embraced herein by the term memory. It is appreciated that a single component referred to as "memory" or "a memory" may be composed of more than one different type of memory, and thus may refer to a collective component including one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

According to various aspects, one or more processes performed by one or more processors may, illustratively as counterpart, be realized by code segments stored in the memory, wherein, the code segments cause, if executed by the one or more processors, the one or more processors to perform the processes (e.g., functions and methods). The code segments, e.g., provided as part of the software, may be updated via a (e.g., mobile) network, e.g., on demand.

In the following reference is made to a self-checkout terminal. The self-checkout terminal may be disposed in a retail market. The retail market may include a market area, in which multiple products are stored and presented to be collected by the customer. One or more self-checkout terminals may be disposed at the exit of the retail market. Once at the self-checkout terminal, the customer scans the bar code of the product being purchased, and puts the product on an optional weighing scale, so that it can be verified that the weight of the product on the scale matches stored weight information for the item scanned, that is, the consistency thereof is determined (also referred as to consistency monitoring). Generally, the consistency monitoring may include comparing two or more information, which are assumed to correspond to the same product. If the information are consist, the consistency monitoring may be positive, otherwise a fraudulent activity may be recognized. The two or more information may include a weight information, product identity, a barcode information, a user input, and the like.

In the following, reference is made to products (also referred as to item or article) to be purchased by a customer. Examples for products may include any consumer good, such as food, electronic products, books, beverages, household products, and clothing. In order to facilitate the understanding, the product are categorized in the following as market products and point-of-sale products (also referred as to POS products).

POS products may refer to any type of product that are commonly placed in the most predominant areas of the market to grab attention or in secured areas of the market to obstruct fraudulent activities. Examples for POS products may include impulse products (also referred as to impulse purchase products), such as such as chocolate, snacks, chewing gum, and candy, for example. Examples for POS products may also include high margin products, such as electronic accessories, fashion jewelry, and the like. Examples for POS products may also include high value products, such as brand-name electronic products, brand-name jewelry, and the like.

Market products may be offered in certain areas of a market, e.g., distant from the self-checkout terminal. Examples for market products are essential goods, emergency goods or staple goods. Essential goods are those the customer needs and are usually purchased because the customer had planned to. Bread, eggs, soap, toothpaste, and soap, for example, are essential goods. Any product that represents a dominant portion of the consumer's diets may be categorized as a staple products. Flashlights, candles, and umbrellas, for example, may be categorized as emergency products. Buying emergency products may be triggered by a sudden or desperate need, i.e., in an emergency. The market product may be offered to be collected by the customer, e.g., using a bag, cart, basket or the like. Thereafter, the customer transports all collected market products to the self-checkout terminal in order to scan them.

It should be understood that certain types of products may be categorized as POS products or likewise as market products, for example, depending on the kind of market, the market layout, market strategy or the type of customers. Thus, the following reference made to each of POS products or market products may be understood to be applicable to any kind of product, which according to the circumstances, may be categorized as POS products or market products.

According to various aspects, the self-checkout terminal described herein includes a storage device which is capable of presenting POS products, e.g., without any security barriers, to the customer, e.g., while the customer performs the self-checkout. For example, the customer may inspect all the POS products stored by the storage device, e.g., by vision and/or physical interaction (e.g., grabbing one of the products from the storage device), e.g., without requiring an interaction with the self-checkout terminal or any vending machine. If the customer decides not to buy the POS product, the POS product may be re-added to the storage device, e.g., without any invoicing. Thus, the self-checkout terminal facilitates the process for the customer and the retailer. For example, the storage device may be more cost-effective, easier to be filled up with POS products than a vending machine, and less disturbing for the selling process.

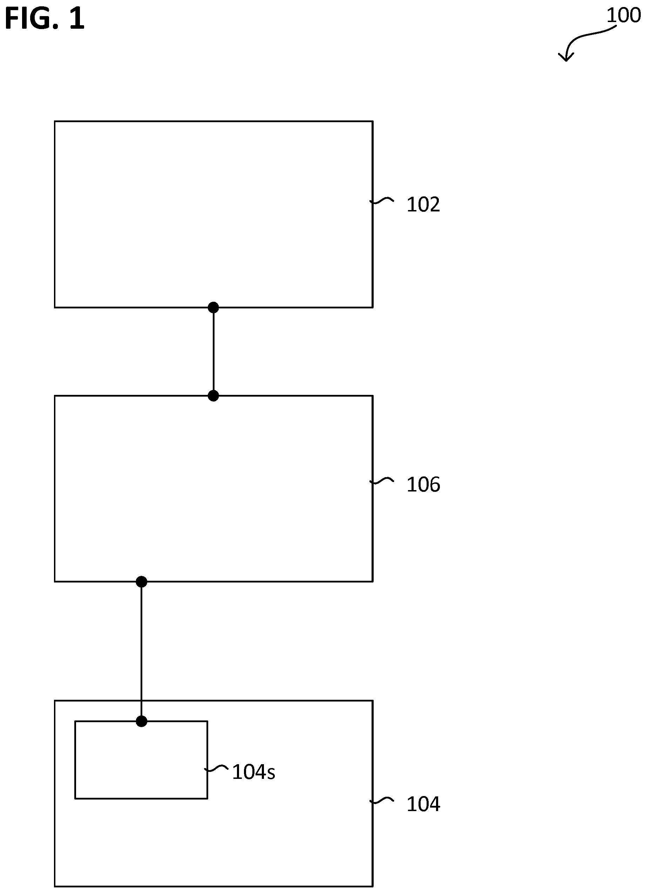

**FIG. 1** illustrates a self-checkout terminal 100 according to various aspects in a schematic diagram. The self-checkout terminal 100 may include a product scanning device 102 that is configured to scan one or more products, e.g., first products (also referred as to market products). Illustratively, the product scanning device 102 may be operated by the customer (also referred as to self-scanning procedure), e.g., by presenting a product to be scanned to the scanning device 102. Thereby, the customer may register each desired product to be bought at the self-checkout terminal 100. For example, the product scanning device 102 may sense a quantity of each product presented to the product scanning device 102.

For example, the product scanning device 102 may include an optical scanning device, an RFID (radio-frequency identification) scanning device, or the like. The optical scanning device may, as example, include a barcode scanning device or an image scanning device. The barcode scanning device may include respective sensors to implement the scanning functionality, such as one or more infrared sensor, one or more cameras, and the like.

The RFID (radio-frequency identification) scanning device may, for example, be configured to communicate by radio waves, e.g., emit radio waves, and/or receive radio waves from a RFID responder (also referred as to tag). The RFID (radio-frequency identification) scanning device may, for example, include a transmitter device and the like.

For example, a product (e.g., a market product and/or a POS product) may have an information medium to be scanned by the product scanning device 102, for example, such as a barcode and/or a RFID-tag. The information medium may include product information allocated to the product, e.g., by a product database. For example, the product information may represent a product identifier, a product type, or a product price.

The self-checkout terminal 100 may include a product storage device 104 that is configured to store one or more second products (also referred as to POS products). POS products may include products that are offered to trigger an unplanned decision to buy the POS product, made just before a purchase. The product storage device 104 may define or include a storage region, in which the one or more POS products may be stored. Once disposed in the storage region, the POS product(s) may maintain at a fixed position, e.g., until they are removed from the product storage device 104.

The product storage device 104 may include a sensor device 104s (also referred as to displacement sensor device 104s). The displacement sensor device 104s may be configured to sense a displacement of one or more POS products regarding the storage region. For example, the displacement sensor device 104s may sense the or each POS product individually, multiple POS product (s) as a group or all POS products in the storage region as a whole. As example, the displacement sensor device 104s may sense, if, that or how much POS product (s) are displaced, e.g., removed from the storage device 104 (also referred as to removal event) or added to the storage device 104 (also referred as to addition event).

The self-checkout terminal 100 may further include a control device 106. The control device 106 may be coupled communicatively with the displacement sensor device 104s and/or the product scanning device 102. For example, the control device 106 may be configured to readout an electrical signal or receive the electrical signal (also referred as to sensor signal) from the displacement sensor device 104s and/or the product scanning device 102.

The sensor signal may be converted into data (also referred as to sensor data) for further processing by the control device 106. Regarding the scanning device 102, the sensor data may represent the product information sensed by the product scanning device 102, e.g., represented by the bar code or responded by the RFID-tag. Regarding the displacement sensor device 104s, the sensor data may represent a status or a change of (e.g., or within) the storage region, e.g., representing a change of the number of products stored in the storage region. The event that the number of products stored in the storage region is decreased is also referred as to removal event. The event that the number of products stored in the storage region is increased is also referred as to addition event.

The control device 106 may be configured to determine, by the displacement sensor device 104s, the removal event and/or the addition event, e.g., if a POS product is removed from the product storage device (also referred as to removed POS product) and/or if a POS product is re-added at the product storage device 104s. By the displacement sensor device 104s, the control device 106 may be able to monitor the POS product(s) in the storage region.

For example, the displacement sensor device 104s may be configured to sense one or more physical quantities of the or each POS product in the storage region. For example, a physical quantity may include a weight of the or each POS product in the storage region. Additionally or alternatively, the physical quantity may include a size, a color, a shape, or a contour of the or each POS product in the storage region, and the like.

Additionally or alternatively, the displacement sensor device 104s is configured to sense an image of the or each POS product in the storage region. For example, the image may be used to identify the removed POS product, e.g., by pattern recognition or the like.

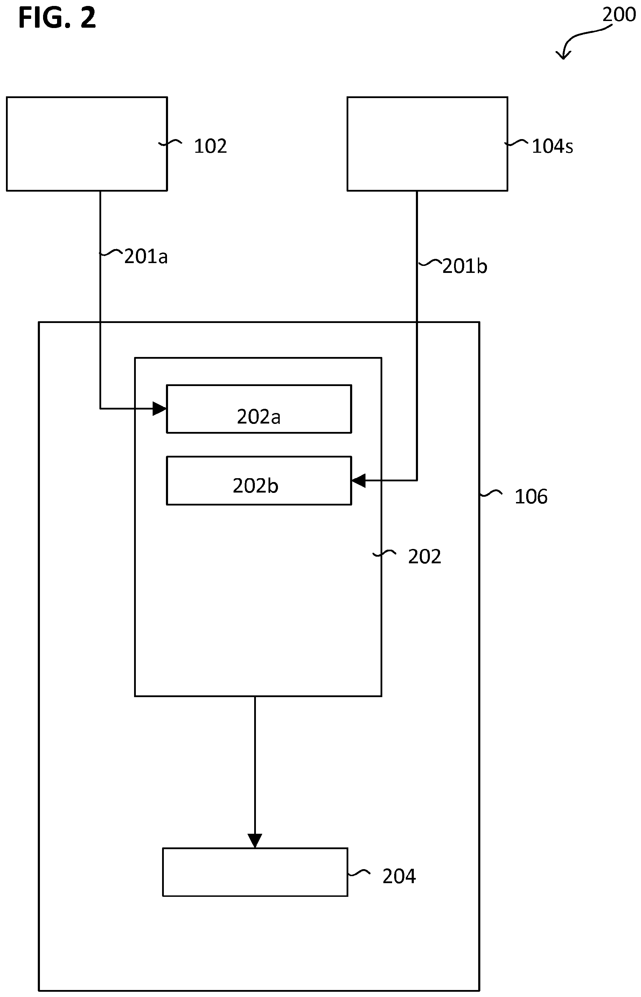

**FIG. 2** illustrates a self-checkout terminal 200 according to various aspects in a schematic diagram, for example, in accordance with the self-checkout terminal 100.

The control device 106 may receive an electrical signal 201a from the product scanning device 102 representing the product information of a market product scanned by the product scanning device 102 (also referred as to scanned product). The control device 106 may be configured to determine first purchase information 202a based on the product information. For example, the control device 106 may identify the scanned product based on the product information. As example, the control device 106 may interrogate a computing device based on the product information and receive the first purchase information from the computing device.

The control device 106 may receive an electrical signal 201b from the displacement sensor device 104s representing a displacement information for the POS product (s) stored by the storage device 104. The control device 106 may be configured to determine second purchase information 202b based on the displacement information. For example, the control device 106 may identify the displaced (e.g., removed) POS product based on the displacement information. As example, the control device 106 may interrogate a product database based on the displacement information and may determine the second purchase information and/or the product identification based on the product database. Additionally or alternatively, the interrogation may be based on data received from the product scanning device 102 in response to the displaced POS product being scanned by the product scanning device 102, as described in more detail herein.

Examples for the displacement information may include: a load change (e.g., a weight change, a force change, a pressure change, a momentum, and the like), an optical change (e.g., the absence of a product in an image or a changed optical pattern), a change in a received RFID-signal (e.g., the absence of a received RFID-signal allocated to a product), a location of displacement. For example, a spatial distribution of the load change (e.g., a momentum) may enable to determine the location of displacement relative to the displacement sensor device 104s. By correlating information (also referred as to arrangement information) about the spatial arrangement of the POS products (e.g., how the products are sorted in the storage area) with the location of displacement, the product identification may be determined.

In general, a product database may include various information about products offered by the market. For example, the product database may allocate, for each of the products, the product identification to at least one of: the displacement information, the arrangement information, and/or the purchase information. For example, the product database may be stored by a computing device and/or the control device 106.

The control device 106 may be configured to add the first purchase information 202a to a list 202 of products to be purchased, e.g., for each market product that is scanned by the scanning device 102. Analogously, the control device 106 may be configured to add second purchase information 202b to a list 202 of products to be purchased, e.g., for each POS product removed from the storage region.

Illustratively, the list 202 of products to be purchased (also referred as to product list) may be virtual shopping cart including the purchase information of each product on the list. For example, the product list 202 may represent that or how much products are identified as "to be bought" by the customer. Therefore, the product list 202 may include purchase information for each product to be bought. The purchase information (e.g., the first purchase information 202a and/or the second purchase information 202b) may identify the product and an amount to be paid for the product (for example, a price that is invoked by the retail market).

In general, adding purchase information (e.g., the first purchase information 202a and/or the second purchase information 202b) to the product list 202 may increase a total number of products represented by the product list 202 and/or a total amount to be paid for the products on the product list 202. Of course, purchase information may be also removed from the product list 202, e.g., in response to detecting that the POS product is re-added to the storage region.

The control device 106 may be further configured to determine payment information based on the product list 202, e.g., considering the number of products and/or the amount to be paid for each of the products. Illustratively, the payment information may represent the total amount to be paid for the products on the product list 202.

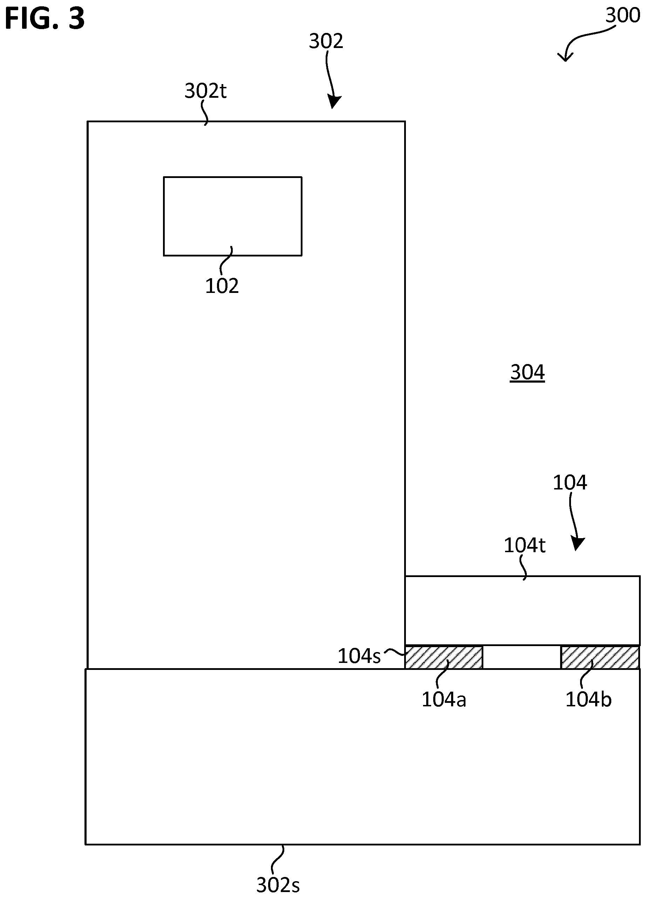

**FIG. 3** illustrates a self-checkout terminal 300 according to various aspects in a schematic view, for example, in accordance with the self-checkout terminal 100 or 200.

The self-checkout terminal 300 may include a body 302, e.g., including a housing, a power plug, a stand 302s and the like. Certain components of the self-checkout terminal 300 may be hold by and/or attached to the body 302, for example, the product scanning device 102 and/or the storage device 104. For example, the product scanning device 102 may be hold by and/or attached to a tower 302t of the body 302.

The displacement sensor device 104s of self-checkout terminal 300 may include a scale device including one or more load cells 104a, 104b. A load cell 104a, 104b may be understood as a type of transducer, specifically a force transducer. The load cell 104a, 104b may be configured to convert a load (caused by a force) such as tension, compression, pressure, or torque into an electrical signal that can be measured and standardized. As the load applied to the load cell 104a, 104b increases, the electrical signal changes (e.g., proportionally). Examples for the load cell may include a hydraulic load cell, pneumatic load cell, and strain gauge load cell. A load cell 104a, 104b is a cost effective sensor for implementing the displacement sensor device 104s, e.g., cheaper than a camera. For example, the displacement sensor device 104s may include a multiple load cells 104a, 104b, e.g., one in each corner of a rectangle. Based on the electrical signal, load data may be provided representing the load caused by (e.g., a weight of) the one or more POS product in the storage region 304.

The control device 106 may be configured to determine a displacement to, from or within the storage region 304, e.g., representing a change of the number of products stored in the storage region 304, based on the load data.

Multiple load cells 104a, 104b enable to determine more precisely the load applied to the displacement sensor device 104s and/or its spatial distribution. For example, the more load cells 104a, 104b are used, the more precisely the force may be determined. For example, a number of the load cells 104a, 104b may be two or more, e.g., three or more, e.g., four or more, e.g., eight or more.

The storage device 104 may include a support structure 104t, e.g., a table, plate or the like. The support structure 104t may define a storage region 304 above the storage device 104. For example, a shelf structure (e.g., a shelf or a rack) may be disposed in the storage region 304 on the support structure 104t. A shelf structure is a cost effective variant for storing one or more POS products in the storage region 304. The weight of the shelf structure and the POS product (s) stored therein may be sensed by the one or more load cells 104a, 104b of the displacement sensor device 104s.

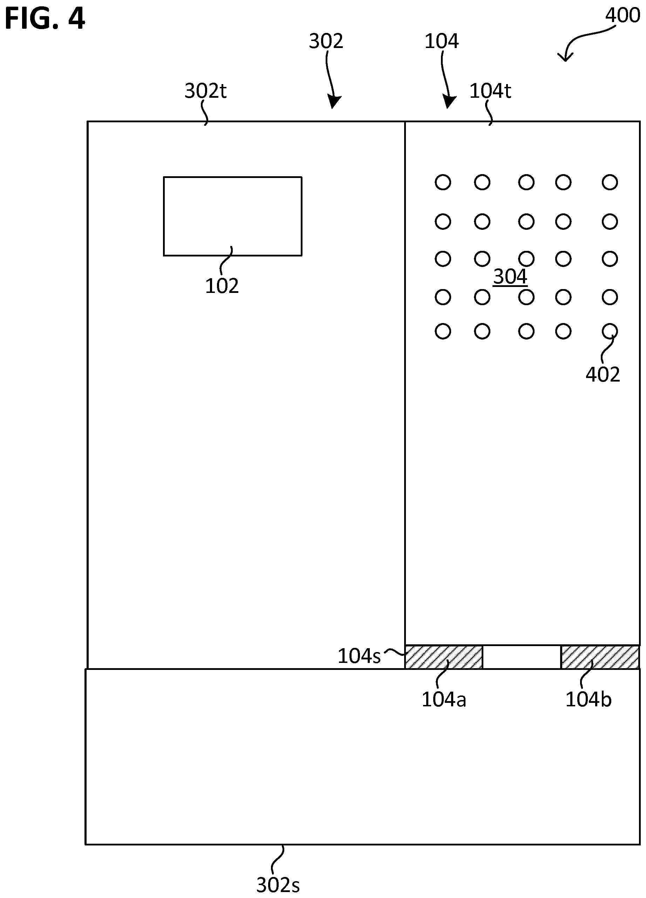

**FIG. 4** illustrates a self-checkout terminal 400 according to various aspects in a schematic view, for example, in accordance with the self-checkout terminal 300, differing therefrom in the configuration of the support structure 104t. The support structure 104t of self-checkout terminal 400 may, for example, extend vertically, e.g., like a plate, and include an attachment structure 402.

For example, the support structure 104t may include a perforated back-plate or stand, to which cantilevers may be attached. For example, the perforated back-plate may include a plurality of openings 402, each of which is configured to receive the end section of a cantilever. By attaching the cantilevers to the perforated back-plate 404, a variable and customizable shelf structure 902 may be provided.

One or more POS products may be attached to the attachment structure 402, e.g., hanging on a respective cantilever or hook into the openings 402. Alternatively, the attachment structure 402 may be configured otherwise (e.g., including clamps or the like), such that one or more POS products may be attached to the attachment structure 402.

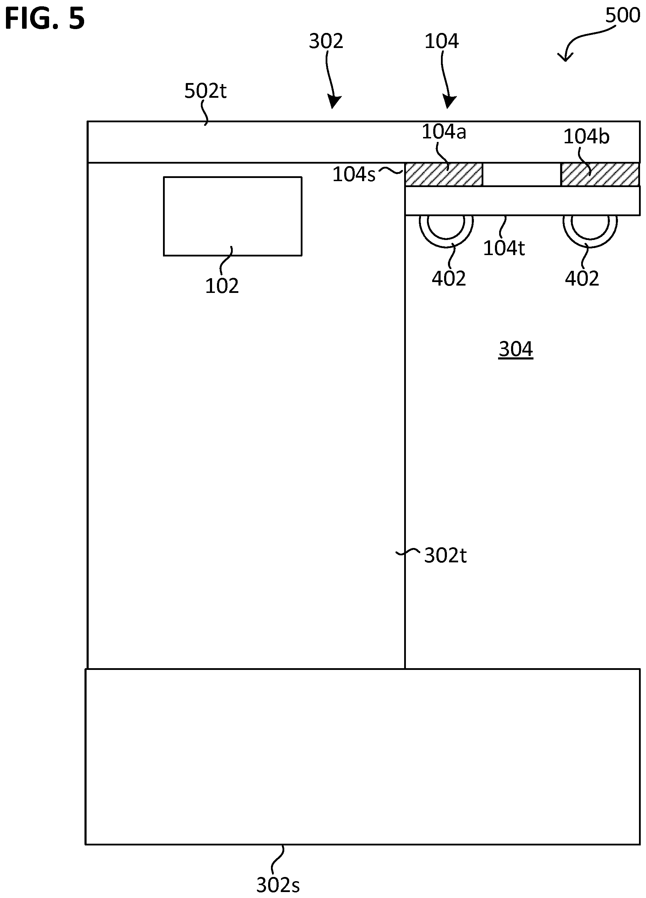

**FIG. 5** illustrates a self-checkout terminal 500 according to various aspects in a schematic view, for example, in accordance with the self-checkout terminal 300 or 400, differing therefrom in the configuration of the storage device 104 and the body 302. The body 302 of the self-checkout terminal 500 may include a top plate 502t, to which the or each load cell 104a, 104b is attached at a bottom of the top plate 502t. The top plate 502t may include or be formed from a cantilever 502t extending above the storage region 304. The support structure 104t of self-checkout terminal 500 may hang below the or each load cell 104a, 104b. For example, one or more shelfs (e.g., racks) may be disposed in the storage region 304 attached to the support structure 104t (e.g., its attachment structure 402). A shelf is a cost effective variant for storing one or more POS products in the storage region 304. The weight of the shelf and the POS product (s) stored therein may be sensed by the one or more load cells 104a, 104b of the displacement sensor device 104s.

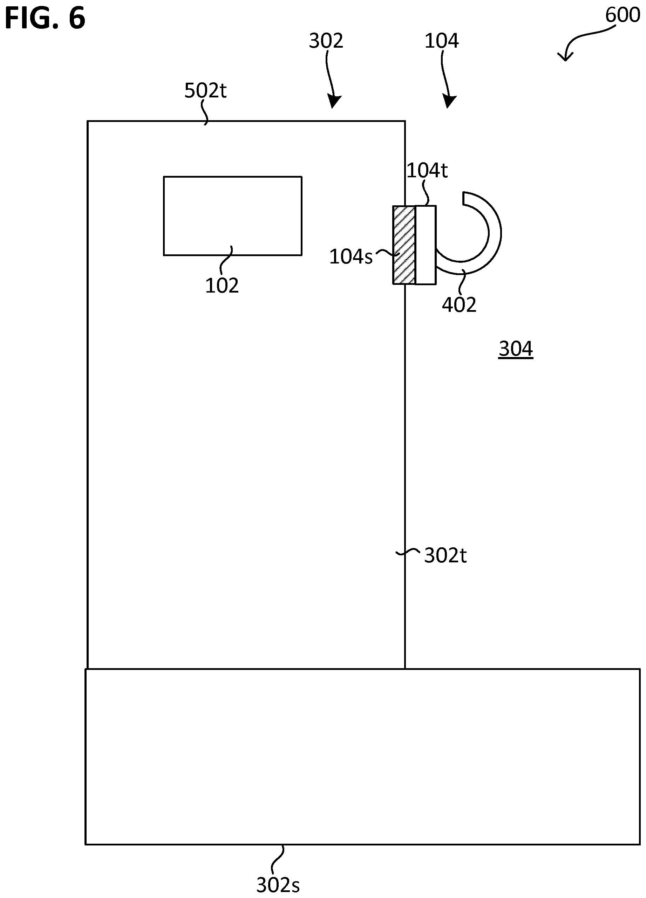

**FIG. 6** illustrates a self-checkout terminal 600 according to various aspects in a schematic view, for example, in accordance with one of the self-checkout terminals 300 to 500, differing therefrom in the configuration of the storage device 104. The storage device 104 of self-checkout terminal 600 may be disposed at a sidewall of the tower 302t.

The support structure 104t of self-checkout terminal 600 may include one or more hooks 402, of which each hook (or a group of hooks 402) may be coupled to one or more load cells 104a, 104b of the displacement sensor device 104s. For example, one or more shelfs (e.g., racks) may be disposed in the storage region 304 hanging from the one or more hooks 402. A shelf is a cost effective variant for storing one or more POS products in the storage region 304. The weight of the shelf and the POS product (s) stored therein may be sensed by the one or more load cells 104a, 104b of the displacement sensor device 104s.

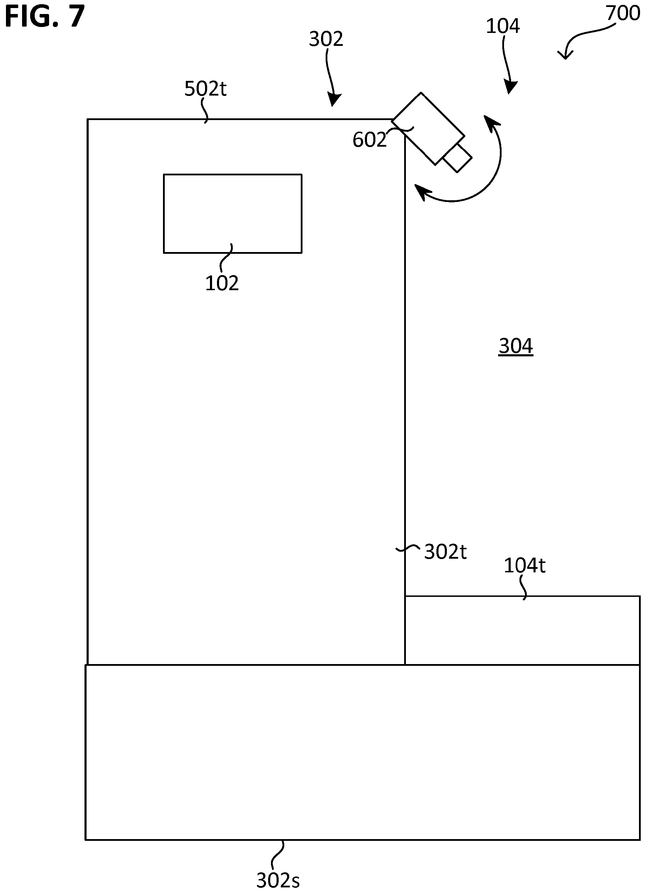

**FIG. 7** illustrates a self-checkout terminal 700 according to various aspects in a schematic view, for example, in accordance with one of the self-checkout terminals 400 to 600, wherein the displacement sensor device 104s of the self-checkout terminal 700 may include one or more imaging devices 602, e.g., additionally or alternatively to the one or more load cells 104a, 104b.

An imaging device may include one or more optoelectronic image sensors 602, for example, a charge-coupled device (CCD) image sensor and/or a complementary metal-oxide-semiconductor (CMOS) image sensor, e.g., a CMOS active-pixel sensor or the like. The imaging device may be configured to provide image data representing the storage region 304, e.g., by capturing still images, or recording moving images.

The control device 106 may be configured to determine a displacement to, from, or within the storage region 304, e.g., representing a change of the number of products stored in the storage region 304, based on the image data. For example, the control device 106 may sense the or each POS product based on pattern recognition applied to the image data. Additionally or alternatively, the control device 106 may determine the status or change of (e.g., within) the storage region 304 based on movement detection, feature recognition or the like.

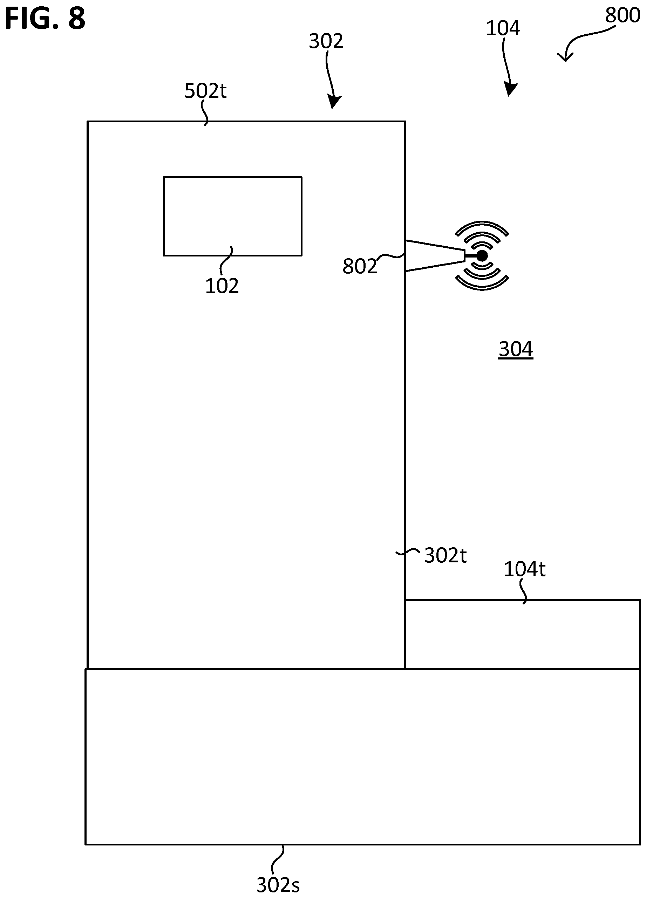

**FIG. 8** illustrates a self-checkout terminal 800 according to various aspects in a schematic view, for example, in accordance with one of the self-checkout terminals 500 to 700, wherein the displacement sensor device 104s of the self-checkout terminal 800 may include one or more transmitter devices 802, e.g., additionally or alternatively to the one or more load cells 104a, 104b and/or the one or more imaging devices 602.

A transmitter device 802 may include one or more antennas to communicate by radio waves (also referred as to radio communication), e.g., by receiving and/or emitting radio waves. For example, the transmitter device 802 may be configured for radio-frequency identification (RFID) using the radio waves to automatically identify and track a tag attached to a POS product in the storage region 304. Unlike optical recognition by an imaging device 602, the tag need not be within the line of sight of the transmitter device 802, so the tag may be embedded in the POS product. This facilitates monitoring the storage region 304. For example, the RFID may enable to determine the product identity of the POS product directly.

The control device 106 may be configured to determine a status or a change of (e.g., within) the storage region 304, e.g., representing a change of the number of products stored in the storage region 304, based on the radio communication. For example, the control device 106 may sense the or each POS product based on RFID.

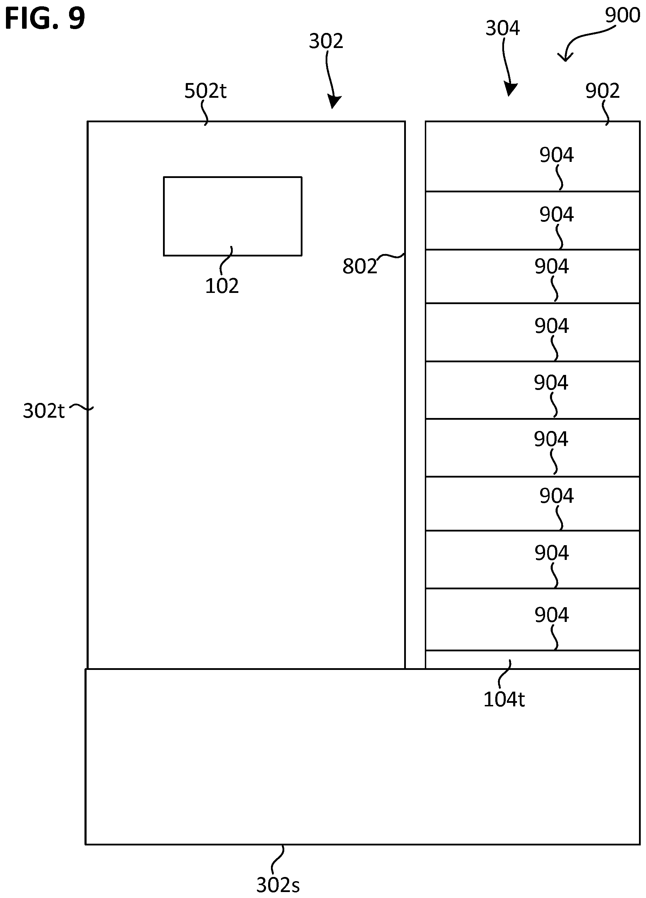

**FIG. 9** illustrates a self-checkout terminal 900 according to various aspects in a schematic view, for example, in accordance with one of the self-checkout terminals 100 to 800, wherein the self-checkout terminal 900 includes a shelf structure 902. The shelf structure 902 may include one or more shelfs (e.g., racks). The shelf structure 902 may include multiple horizontal planes 904 to hold one or more POS products in the storage region. The shelf structure 902 may be disposed on the at the support structure 104t as described above. For example, the shelf structure 902 may be detachably mounted at the support structure 104t, that is, the shelf structure 902 may be unmounted from the support structure 104t without damage. Detachably mounting may, for example, include mounting by tight fit (also referred as to interlocking fit). Additionally or alternatively, shelf structure 902 may be mounted otherwise at the support structure 104t as described above, e.g., hanging from or standing on the support structure 104t.

The shelf structure 902 may be monitored by the displacement sensor device 104s as described above, e.g., using visual monitoring, load monitoring, or radio monitoring.

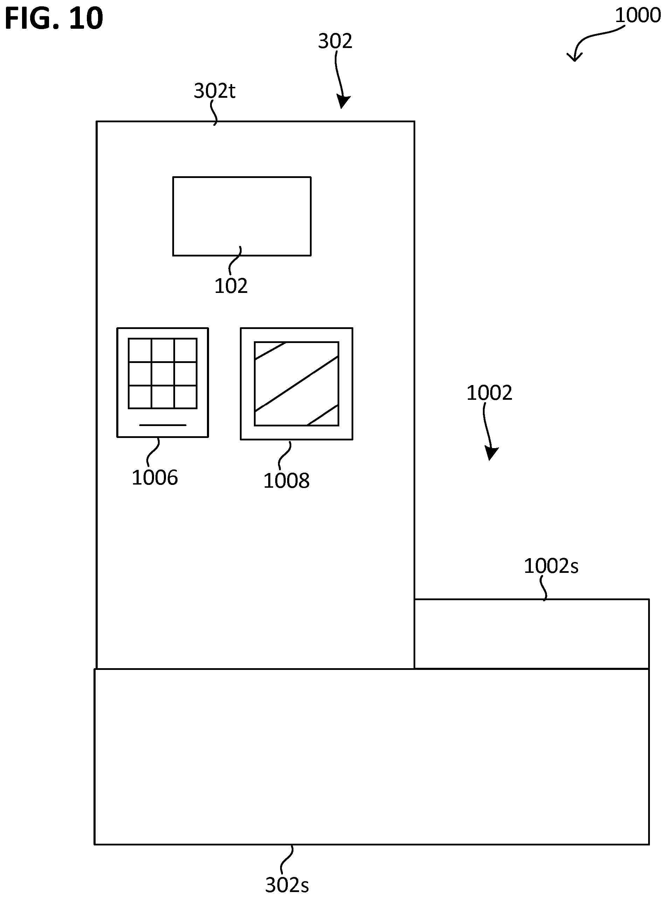

**FIG. 10** illustrates a self-checkout terminal 1000 according to various aspects in a schematic view, for example, in accordance with one of the self-checkout terminals 100 to 900, wherein the self-checkout terminal 1000 includes further a deposition area 1002 to deposit one or more products to be purchased.

The deposition area 1002 may include a further sensor device 1002s (also referred as to safety sensor device 1002s), which is used to monitor the self-scanning procedure performed by the customer. Illustratively, the safety sensor device 1002s is used to detect fraudulent activity during the self-scanning procedure. For example, the safety sensor device 1002s may include a scale (also referred as to safety scale) or another type of sensor, e.g., similar to the displacement sensor device 104s.

Differently to the sensor data obtained by the displacement sensor device 104s, sensor data obtained by the safety sensor device 1002s is used for consistency monitoring. Therefore, the customer is requested to dispose each product that was scanned by the scanning device 102 in the deposition area 1002, e.g., in a bag disposed on the safety scale.

The consistency monitoring may include determining if a (e.g., market or POS) product that was scanned by the scanning device 102 (also referred as to scanned product) and the product that is subsequently disposed in the deposition area 1002 are the same product, that is, if they are consistent. For example, the product disposed in the deposition area 1002 may be sensed, e.g., by sensing the increased load (e.g., weight) by the safety scale. Based thereon, the control device 106 may check, whether the sensor data from the scanning device 102 and the sensor data from the safety sensor device 1002s are consistent. For example, the control device 106 may check, whether the expected weight of the scanned product matches the change of load (e.g., weight) sensed by the safety scale. If the sensor data from the scanning device 102 and the sensor data from the safety sensor device 1002s are consistent, the product (e.g., its purchase information) may be confirmed to be added to the product list 202. Otherwise, the control device 106 may request the customer to repeat the scanning and/or emit an error message. Analogously, one or more further products scanned by the scanning device 102 may be checked by the consistency monitoring.

Analogously, one or more of the POS products removed from the storage device may be optionally scanned. The control device 106 may check, whether the expected weight of the scanned POS product matches the change of load (e.g., weight) sensed by the displacement sensor device 104s.

Analogously, if the customer decides not to buy a product that is already disposed in the deposition area 1002, the product may be removed from the deposition area 1002 by the customer and also (e.g., its purchase information) removed from the product list 202. The consistency monitoring may be also applied to the removal of the product.

As result, the control device 106 monitors, if the product list 202 is consistent with the product(s) disposed in the deposition area 1002. As example, in response to a product being removed from the storage region 304, the product (e.g., its purchase information) is added to the product list 202. In response to a product being removed from the deposition area 1002, the product (e.g., its purchase information) is removed from to the product list 202.

The self-checkout terminal 1000 may further include a financial transaction device 1006, that may be used for one or more financial transactions based on the payment information 204. For example, the financial transaction device 1006 may include a card reading device configured to receive a banking card and to read banking account information from the banking card. Additionally or alternatively, the card reading device may be configured to read banking account information via NFC, e.g., from a mobile device and/or the banking card.

The financial transaction device 1006 may, for example, include at least one verification device configured to receive a verification input that associates the banking card with the customer. Of course, other payment forms may be used additionally or alternatively to the banking card. Examples for a payment form may include a debit card, a debit account, a credit card, a credit account, or money. Examples for money may include currency, financial instruments, other legal instruments related to payment, promises, debts, etc.

Additionally or alternatively, the financial transaction device 1006 may, for example, include other components that enable to conduct the financial transaction, e.g., a secure data interface for transmitting secured data regarding the financial transaction. For example, the secure data interface may communicate with a banking server.

For example, the financial transaction device 1006 may further include a printer to print a bill including a representation of the conducted financial transaction, e.g., details thereof and/or a summary thereof. As example, the printer may be a thermal printer or the like.

The self-checkout terminal 1000 may optionally include a user interface device 1008. For example, the user interface device 1008 may include or be formed from a display device (e.g., including one or more screens). The display device may be used to display information regarding the self-checkout conducted by the customer (also referred as to self-checkout information). For example, the self-checkout information may include a representation of the payment information, e.g., a (searchable or editable) virtual bill. The virtual bill may include a table that assigns the or each product on the product list 202 with an amount to pay for the product.

For example, the self-checkout information may include a request for continuing the self-checkout. As example, the customer may be requested to scan the removed POS product by the scanning device 102. This enables to determine the product identity in case, the product identity of the removed POS product cannot be determined from the sensor data of the displacement sensor device 104s alone, e.g., in an unambiguous manner. Also, a double check comparing the product identity with the sensor data of the displacement sensor device 104s may increase the reliability.

Additionally or alternatively, the customer may be requested to select the type of the removed POS product (also referred as to selection request), e.g., from a list of potential products displayed by the display device. For example, the list of potential products may be stored by the control device 106 in accordance with the types of products in the storage region 304. Additionally or alternatively, the list of potential products may be adapted (e.g., refined) by the control device 106 based on the sensor data of the displacement sensor device 104s. This enables to determine the product identity in case, the product identity of the removed POS product cannot be determined from the sensor data of the displacement sensor device 104s alone in, e.g., an unambiguous manner. Also, a double check comparing the product identity with the sensor data of the displacement sensor device 104s may increase the reliability.

Of course, another mechanism may be implemented that uses the customer's assistance to determine or confirm the product identity of the removed POS product.

Optionally, the user interface device 1008 may include a user input device, e.g., a touch screen and/or one or more physical switches, and/or a keyboard and the like.

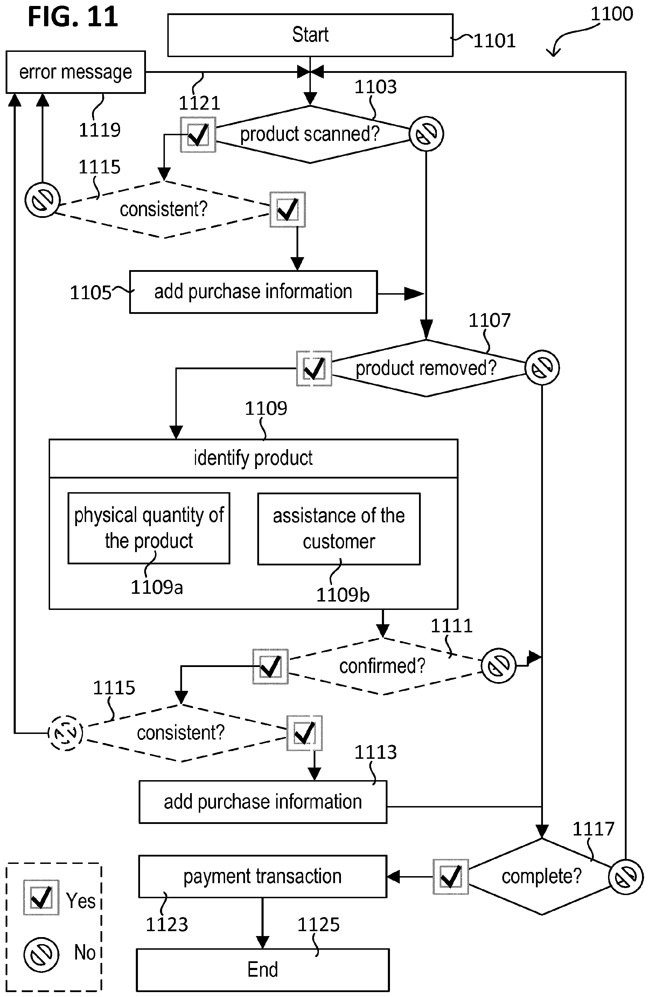

**FIG. 11** illustrates a scheme 1100 in a schematic flow diagram for operating a self-checkout terminal according to various aspects, for example, in accordance with one of the self-checkout terminals 100 to 1000. The scheme 1100 for operating the self-checkout terminal may be implemented by the control device 106. The interaction with the customer, e.g., receiving an input and/or displaying information, as described in the following, may be performed by one or more display devices and/or one or more input devices of the self-checkout terminal.

In 1101, a self-checkout session may be initiated. Initiating the self-checkout session may be triggered by receiving an input of the customer. For example, the customer may start the self-checkout session by touching the user interface 1008, e.g., a touch screen thereof.

Additionally or alternatively, the self-checkout session may be initiated in response to a change of the status of the storage region 304. For example, the customer may start the self-checkout session by removing a POS product from the storage region 304. This facilitates to buy a POS product.

Additionally or alternatively, the self-checkout session may be initiated in response to scanning a product by the scanning device 102. This facilitates to buy a market product.

In 1103, it is monitored, if a product is scanned by the scanning device 102. If a product is scanned by the scanning device 102, the purchase information for the product is added 1105 to the product list 202 based on the sensor data of the scanning device 102.

In 1107, it is monitored, if a POS product is removed from the storage device 104, e.g., by monitoring the status of the storage device 104 (e.g., the load applied thereto), e.g., by the displacement sensor device 104s. If a POS product is removed from the storage device 104, the POS product information of the POS product removed from the storage device 104 is determined 1109 (also referred as to identifying the POS product).

Identifying 1109 the POS product may be based on the displacement information, e.g., by detecting that a load (e.g., weight) applied to the displacement sensor device 104s is reduced. The status of the storage device 104 may represent, for example, a number of the POS products stored by the storage device 104. For example, the weight of a removed POS product(s) may be determined 1109a based on the reduction of the load, e.g., the difference thereof. The product identity may be read from the product database, which allocates the weight (or another physical quantity) of the or each POS product to a product identity. Analogously, another physical quantity of the removed POS product may be sensed by the displacement sensor device 104s and used for interrogating the product database.

Identifying 1109 the removed POS product may include requesting 1109b the assistance of the customer, e.g., by displaying a confirmation request and/or a selection request. Optionally, it may be determined, if the received input (e.g., responding the confirmation request and/or a selection request) to the input device (e.g., by the customer) is consistent with the physical quantity of the removed POS product may be sensed by the displacement sensor device 104s. This enhances the reliability.

Additionally or alternatively, requesting the assistance 1109b of the customer may include displaying a request to scan the removed POS product by the product scanning device 102. For example, the barcode of the removed POS product may be scanned by the product scanning device 102. The product identity may be read from the product database, which allocates the barcode (or another physical quantity) of the product to the product identity.

If a POS product is removed from the storage device 104, the purchase information for the removed POS product is added 1113 to the product list 202 based on the product identity of the removed POS product and/or based on the physical quantity of the POS product sensed by the displacement sensor device 104s.

In 1111, it is optionally confirmed, that the customer wants to purchase the removed POS product. Therefore, a purchase confirmation request may be displayed. For example, the purchase information for the removed POS product is added 1113 may be added, when (e.g., only when) the purchase confirmation is received 1111.

In 1115, it is optionally determined, if the purchase information to be added are consistent with the sensor data (also referred as to consistency monitoring). The consistency monitoring may be based on sensor data of the displacement sensor device 104s, if the purchase information to be added corresponds to a POS product. The consistency monitoring may be based on sensor data of the safety sensor device 1002s, if the purchase information to be added corresponds to a scanned produced (e.g., a POS product or market product). For example, the purchase information may be added, when (e.g., only when) the purchase information to be added are consistent with the sensor data. When the purchase information to be added are not consistent with the sensor data, an error message may be output 1119, e.g., via the display device of the self-checkout terminal and/or via an assistance requester of the self-checkout terminal. The assistance requester may, e.g., output a signal to request assistance by the employees of the retail market or another authorized person.

As long as the error message is pending, the self-checkout session may be suspended. The self-checkout session may be continued, e.g., when the error message is confirmed 1121. For example, the error message may be confirmed 1121 by receiving an authorized input, e.g., by the employees of the retail market or another authorized person.

Analogously, as long as a displayed request is pending (e.g., not responded), the self-checkout session may be suspended. The self-checkout session may be continued, if an input is received corresponding to the request.

In 1117, an input is received representing a request to complete the self-checkout session (also referred as to ending request). When the ending request is received, the payment information may be determined and the payment transaction may be conducted 1123. When the ending request is not received, the sequence above may be repeated, e.g., starting at 1103.

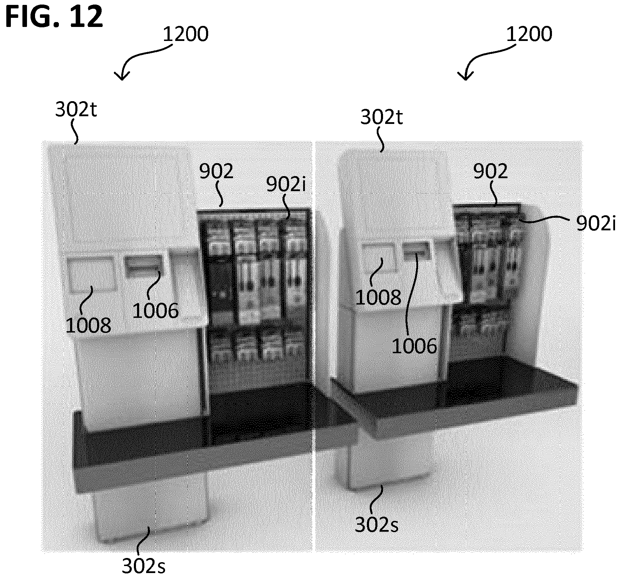

**FIG. 12** illustrates multiple self-checkout terminals 1200 according to various aspects in a schematic perspective view, for example, each of which being in accordance with one of the self-checkout terminals 100 to 1000. The shelf structure 902 may stand on a scale 104s, such that it can be detected when a POS product is removed from the shelf structure 902.

In response thereto, either the POS product may be displayed on the screen 1008 to enable the customer to confirm the product to be added to the product list 202, e.g., by touch. Additionally or alternatively, the control device 106 monitors that a removed POS product was scanned by the customer before completing of the self-checkout session.

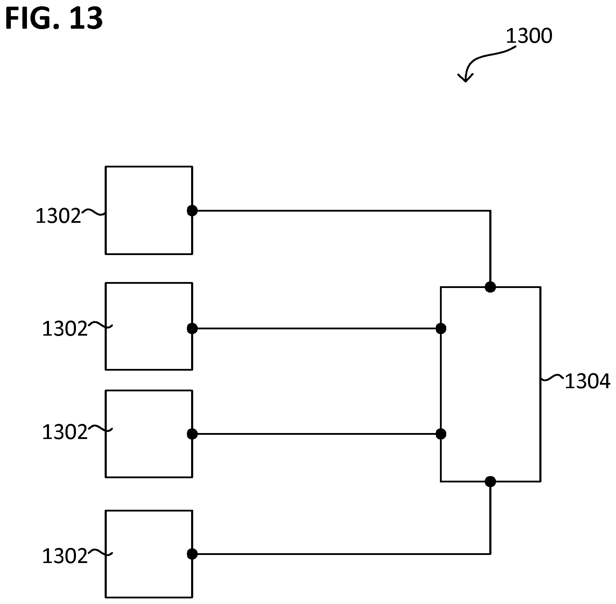

**FIG. 13** illustrates a self-checkout system 1300 according to various aspects in a schematic diagram, for example, including one or more of the self-checkout terminals 1302, e.g., each of which being configured according to one of the self-checkout terminals 100 to 1000 or 1200. The self-checkout system 1300 may further include a computing device 1304 configured to communicate with the one or more self-checkout terminals 1304. For example, the computing device 1304 may host (e.g., store) the product database. Additionally or alternatively, the computing device 1304 may include a gateway connecting the one or more self-checkout terminals 1304 to a public network, e.g., the internet. For example, the gateway may provide a secured (for example, encrypted) connection via the public network to the banking server.

## Claims

1. Self-checkout terminal (100 to 1000, 1200, 1302), comprising:
a product scanning device (102) to scan one or more first products;
a product storage device (104) to store one or more second products, wherein the product storage device (104) comprises a sensor device (104s);
a control device (106) configured to
determine (1103), by the sensor device (104s), if a second product of the one or more second products is removed from the product storage device (104);
add (1105) first purchase information (202a) to a list (202) of products to be purchased, when a first product of the one or more first products is scanned by the scanning device (102);
add (1113) second purchase information (202b) to the list (202) of products to be purchased, when the second product is removed from the product storage device (104);
determine (1123) payment information (204) based on the list (202) of products to be purchased;
the self-checkout terminal further comprising:
a deposition area (1002) to deposit the products to be purchased, wherein the deposition area comprises a further sensor device (1002s);
wherein the control device (106) is further configured to
determine, by the further sensor device (1002s), if a product of the products to be purchased is disposed in or removed from the deposition area;
determine (1115), if the list (202) of products to be purchased is consistent with a result of the determination, if the product is disposed in or removed from the deposition area.

2. The self-checkout terminal (100 to 1000, 1200, 1302) of claim 1, wherein the sensor device (104s) comprises one or more load cells.

3. The self-checkout terminal (100 to 1000, 1200, 1302) of claim 1 or 2, wherein the product storage device (104) comprises a support structure to support the one or more second products.

4. The self-checkout terminal (100 to 1000, 1200, 1302) of claim 3, wherein the product storage device (104) comprises a shelf structure to receive the one or more second products, wherein the shelf structure is configured to be detachably mounted at the support structure.

5. The self-checkout terminal (100 to 1000, 1200, 1302) of one of claims 1 to 4, wherein the further sensor device (1002s) comprises one or more further load cells.

6. The self-checkout terminal (100 to 1000, 1200, 1302) of one of claims 1 to 5, wherein the control device (106) is further configured to:
determine (1109a), by the sensor device (104s), a physical quantity of the second product removed from the product storage device (104);
identify (1109) the second product removed from the product storage device (104) based on the physical quantity;
provide the second purchase information (202b) based on a result of the identifying the second product.

7. The self-checkout terminal (100 to 1000, 1200, 1302) of one of claims 1 to 6, wherein the control device (106) is further configured to:
scan (1109b), by the product scanning device (102), the second product removed from the product storage device (104);
identify (1109) the second product removed from the product storage device (104) based on a result of the scanning the second product;
provide the second purchase information (202b) based on a result of the identifying the second product.

8. The self-checkout terminal (100 to 1000, 1200, 1302) of one of claims 1 to 7, further comprising:
a financial transaction device (1006), wherein the control device (106) is further configured to conduct a financial transaction according to the payment information (204) by the financial transaction device (1006).

9. The self-checkout terminal (100 to 1000, 1200, 1302) of one of claims 1 to 8, further comprising:
a display device (1008), wherein the control device (106) is configured to display via the display device (1008) a request related to the second product removed from the product storage device (104).

10. The self-checkout terminal (100 to 1000, 1200, 1302) of claim 9, wherein the request comprises a request to approve or disapprove adding the second purchase information (202b) to the list (202) of products to be purchased.

11. The self-checkout terminal (100 to 1000, 1200, 1302) of claim 10, wherein the control device (106) is configured to suspend a self-checkout session, until
receiving one or more inputs related to the second product;
determining, by the sensor device (104s), that the second product is re-added to the product storage device (104) if the prompt is disapproved.

12. The self-checkout terminal (100 to 1000, 1200, 1302) of claim 11, further comprising:
a user input device to receive one or more inputs to approve or disapprove adding the second purchase information (202b) to the list (202) of products to be purchased.

13. A method for operating a self-checkout terminal (100 to 1000, 1200, 1302), the method including:
adding (1105) first purchase information (202a) to a list (202) of products to be purchased, when a first product is scanned by a scanning device (102) of the self-checkout terminal (100 to 1000, 1200, 1302);
determining (1103), by a sensor device (104s) of the self-checkout terminal (100 to 1000, 1200, 1302), if a second product is removed from a product storage device (104) of the self-checkout terminal (100 to 1000, 1200, 1302);
adding (1113) second purchase information (202b) to the list (202) of products to be purchased, when the second product is removed from the product storage device (104);
determining (1123) payment information (204) based on the list (202) of products to be purchased
determine, by a further sensor device (1002s) of a deposition area (1002) for depositing the products to be purchased, if a product of the products to be purchased is disposed in or removed from the deposition area;
determine (1115), if the list (202) of products to be purchased is consistent with a result of the determination, if the product is disposed in or removed from the deposition area (1002).

14. A non-transitory computer-readable medium comprising instructions, which, when carried out by one or more processors, implement the method of claim 13.

## Patentansprüche

1. Selbstbedienungskassenendgerät (100 bis 1000, 1200, 1302), umfassend:
eine Produktscanvorrichtung (102) zum Scannen eines oder mehrerer erster Produkte;
eine Produktlagerungsvorrichtung (104) zum Lagern eines oder mehrerer zweiter Produkte, wobei die Produktlagerungsvorrichtung (104) eine Sensorvorrichtung (104s) umfasst;
eine Steuervorrichtung (106), die zu Folgendem ausgelegt ist:
Bestimmen (1103) durch die Sensorvorrichtung (104s), ob ein zweites Produkt des einen oder der mehreren zweiten Produkte aus der Produktlagerungsvorrichtung (104) entfernt wird;
Hinzufügen (1105) erster Kaufinformationen (202a) zu einer Liste (202) von zu kaufenden Produkten, wenn ein erstes Produkt des einen oder der mehreren ersten Produkte durch die Scanvorrichtung (102) gescannt wird;
Hinzufügen (1113) zweiter Kaufinformationen (202b) zu der Liste (202) von zu kaufenden Produkten, wenn das zweite Produkt aus der Produktlagerungsvorrichtung (104) entfernt wird;
Bestimmen (1123) von Zahlungsinformationen (204) basierend auf der Liste (202) von zu kaufenden Produkten;
wobei das Selbstbedienungskassenendgerät ferner Folgendes umfasst:
einen Ablagebereich (1002) zum Ablegen der zu kaufenden Produkte, wobei der Ablagebereich eine weitere Sensorvorrichtung (1002s) umfasst;
wobei die Steuervorrichtung (106) ferner zu Folgendem ausgelegt ist:
Bestimmen durch die weitere Sensorvorrichtung (1002s), ob ein Produkt der zu kaufenden Produkte in dem Ablagebereich angeordnet oder aus diesem entfernt wird;
Bestimmen (1115), ob die Liste (202) von zu kaufenden Produkten mit einem Ergebnis der Bestimmung, ob das Produkt in dem Ablagebereich angeordnet oder aus diesem entfernt wird, übereinstimmt.

2. Selbstbedienungskassenendgerät (100 bis 1000, 1200, 1302) nach Anspruch 1, wobei die Sensorvorrichtung (104s) eine oder mehrere Wägezellen umfasst.

3. Selbstbedienungskassenendgerät (100 bis 1000, 1200, 1302) nach Anspruch 1 oder 2, wobei die Produktlagerungsvorrichtung (104) eine Tragstruktur zum Tragen des einen oder der mehreren zweiten Produkte umfasst.

4. Selbstbedienungskassenendgerät (100 bis 1000, 1200, 1302) nach Anspruch 3, wobei die Produktlagerungsvorrichtung (104) eine Regalstruktur zum Aufnehmen des einen oder der mehreren zweiten Produkte umfasst, wobei die Regalstruktur dazu ausgelegt ist, lösbar an der Tragstruktur montiert zu werden.

5. Selbstbedienungskassenendgerät (100 bis 1000, 1200, 1302) nach einem der Ansprüche 1 bis 4, wobei die weitere Sensorvorrichtung (1002s) eine oder mehrere weitere Wägezellen umfasst.

6. Selbstbedienungskassenendgerät (100 bis 1000, 1200, 1302) nach einem der Ansprüche 1 bis 5, wobei die Steuervorrichtung (106) ferner zu Folgendem ausgelegt ist:
Bestimmen (1109a) einer physikalischen Größe des zweiten Produkts, das aus der Produktlagerungsvorrichtung (104) entfernt wurde, durch die Sensorvorrichtung (104s);
Identifizieren (1109) des zweiten Produkts, das aus der Produktspeicherungsvorrichtung (104) entfernt wurde, basierend auf der physikalischen Größe;
Bereitstellen der zweiten Kaufinformationen (202b) basierend auf einem Ergebnis des Identifizierens des zweiten Produkts.

7. Selbstbedienungskassenendgerät (100 bis 1000, 1200, 1302) nach einem der Ansprüche 1 bis 6, wobei die Steuervorrichtung (106) ferner zu Folgendem ausgelegt ist:
Scannen (1109b) des zweiten Produkts, das aus der Produktlagerungsvorrichtung (104) entfernt wurde, durch die Produktscanvorrichtung (102);
Identifizieren (1109) des zweiten Produkts, das aus der Produktspeicherungsvorrichtung (104) entfernt wurde, basierend auf einem Ergebnis des Scannens des zweiten Produkts;
Bereitstellen der zweiten Kaufinformationen (202b) basierend auf einem Ergebnis des Identifizierens des zweiten Produkts.

8. Selbstbedienungskassenendgerät (100 bis 1000, 1200, 1302) nach einem der Ansprüche 1 bis 7, ferner umfassend: eine Finanztransaktionsvorrichtung (1006), wobei die Steuervorrichtung (106) ferner dazu ausgelegt ist, eine Finanztransaktion gemäß den Zahlungsinformationen (204) durch die Finanztransaktionsvorrichtung (1006) durchzuführen.

9. Selbstbedienungskassenendgerät (100 bis 1000, 1200, 1302) nach einem der Ansprüche 1 bis 8, ferner umfassend: eine Anzeigevorrichtung (1008), wobei die Steuervorrichtung (106) dazu ausgelegt ist, über die Anzeigevorrichtung (1008) eine Anforderung in Bezug auf das zweite Produkt anzuzeigen, das aus der Produktspeicherungsvorrichtung (104) entfernt wurde.

10. Selbstbedienungskassenendgerät (100 bis 1000, 1200, 1302) nach Anspruch 9, wobei die Anforderung eine Anforderung zum Genehmigen oder Ablehnen des Hinzufügens der zweiten Kaufinformationen (202b) zu der Liste (202) von zu kaufenden Produkten umfasst.

11. Selbstbedienungskassenendgerät (100 bis 1000, 1200, 1302) nach Anspruch 10, wobei die Steuervorrichtung (106) dazu ausgelegt ist, eine Selbstbedienungskassensitzung zu unterbrechen, bis
eine oder mehrere Eingaben in Bezug auf das zweite Produkt empfangen werden;
von der Sensorvorrichtung (104s) bestimmt wird, dass das zweite Produkt erneut zu der Produktlagerungsvorrichtung (104) hinzugefügt wird, falls die Anforderung nicht genehmigt wird.

12. Selbstbedienungskassenendgerät (100 bis 1000, 1200, 1302) nach Anspruch 11, ferner umfassend:
eine Benutzereingabevorrichtung zum Empfangen einer oder mehrerer Eingaben zum Genehmigen oder Ablehnen des Hinzufügens der zweiten Kaufinformationen (202b) zu der Liste (202) von zu kaufenden Produkten.

13. Verfahren zum Betreiben eines Selbstbedienungskassenendgeräts (100 bis 1000, 1200, 1302), wobei das Verfahren Folgendes umfasst:
Hinzufügen (1105) erster Kaufinformationen (202a) zu einer Liste (202) von zu kaufenden Produkten, wenn ein erstes Produkt von einer Scanvorrichtung (102) des Selbstbedienungskassenendgeräts (100 bis 1000, 1200, 1302) gescannt wird;
Bestimmen (1103) durch eine Sensorvorrichtung (104s) des Selbstbedienungskassenendgeräts (100 bis 1000, 1200, 1302), ob ein zweites Produkt aus einer Produktlagerungsvorrichtung (104) des Selbstbedienungskassenendgeräts (100 bis 1000, 1200, 1302) entfernt wird;
Hinzufügen (1113) zweiter Kaufinformationen (202b) zu der Liste (202) von zu kaufenden Produkten, wenn das zweite Produkt aus der Produktlagerungsvorrichtung (104) entfernt wird;
Bestimmen (1123) von Zahlungsinformationen (204) basierend auf der Liste (202) von zu kaufenden Produkten; Bestimmen durch eine weitere Sensorvorrichtung (1002s) eines Ablagebereichs (1002) zum Ablegen der zu kaufenden Produkte, ob ein Produkt der zu kaufenden Produkte in dem Ablagebereich angeordnet oder aus diesem entfernt wird; Bestimmen (1115), ob die Liste (202) von zu kaufenden Produkten mit einem Ergebnis der Bestimmung, ob das Produkt in dem Ablagebereich (1002) angeordnet oder aus diesem entfernt wird, übereinstimmt.

14. Nichtflüchtiges computerlesbares Medium, umfassend Anweisungen, die, wenn sie von einem oder mehreren Prozessoren ausgeführt werden, das Verfahren nach Anspruch 13 implementieren.

## Revendications

1. Terminal (100 à 1000, 1200, 1302) de caisse en libre service, comprenant :
un dispositif (102) de scrutation de produits servant à scruter un ou plusieurs premiers produits ;
un dispositif (104) de stockage de produits servant à stocker un ou plusieurs seconds produits, le dispositif (104) de stockage de produits comprenant un dispositif capteur (104s) ;
un dispositif (106) de commande configuré pour
faire déterminer (1103), par le dispositif capteur (104s), si un second produit parmi le ou les seconds produits est retiré du dispositif (104) de stockage de produits ;
ajouter (1105) des premières informations (202a) d'achat à une liste (202) de produits à acheter, lorsqu'un premier produit parmi le ou les premiers produits est scruté par le dispositif (102) de scrutation ;
ajouter (1113) des secondes informations (202b) d'achat à la liste (202) de produits à acheter, lorsque le second produit est retiré du dispositif (104) de stockage de produits ;
déterminer (1123) des informations (204) de paiement sur la base de la liste (202) des produits à acheter ;
le terminal de caisse en libre service comprenant en outre :
une zone (1002) de dépôt pour déposer les produits à acheter, la zone de dépôt comprenant un dispositif capteur supplémentaire (1002s) ;
le dispositif (106) de commande étant en outre configuré pour
faire déterminer, par le dispositif capteur supplémentaire (1002s), si un produit parmi les produits à acheter est disposé dans la zone de dépôt ou retiré de celle-ci ;
déterminer (1115), si la liste (202) des produits à acheter est en accord avec un résultat de la détermination, si le produit est disposé dans la zone de dépôt ou retiré de celle-ci.

2. Terminal (100 à 1000, 1200, 1302) de caisse en libre service selon la revendication 1, le dispositif capteur (104s) comprenant une ou plusieurs cellules dynamométriques.

3. Terminal (100 à 1000, 1200, 1302) de caisse en libre service selon la revendication 1 ou 2, le dispositif (104) de stockage de produits comprenant une structure d'appui servant à supporter le ou les seconds produits.

4. Terminal (100 à 1000, 1200, 1302) de caisse en libre service selon la revendication 3, le dispositif (104) de stockage de produits comprenant une structure d'étagère servant à recevoir le ou les seconds produits, la structure d'étagère étant configurée pour être montée de manière amovible au niveau de la structure d'appui.

5. Terminal (100 à 1000, 1200, 1302) de caisse en libre service selon l'une des revendications 1 à 4, le dispositif capteur supplémentaire (1002s) comprenant une ou plusieurs cellules dynamométriques supplémentaires.

6. Terminal (100 à 1000, 1200, 1302) de caisse en libre service selon l'une des revendications 1 à 5, le dispositif (106) de commande étant en outre configuré pour :
faire déterminer (1109a), par le dispositif capteur (104s), une quantité physique du second produit retirée du dispositif (104) de stockage de produits ;
identifier (1109) le second produit retiré du dispositif (104) de stockage de produits sur la base de la quantité physique ;
fournir les secondes informations (202b) d'achat sur la base d'un résultat de l'identification du second produit.

7. Terminal (100 à 1000, 1200, 1302) de caisse en libre service selon l'une des revendications 1 à 6, le dispositif (106) de commande étant en outre configuré pour :
faire scruter (1109b), par le dispositif (102) de scrutation de produits, le second produit retiré du dispositif (104) de stockage de produits ;
identifier (1109) le second produit retiré du dispositif (104) de stockage de produits sur la base d'un résultat du scrutation du second produit ;
fournir les secondes informations (202b) d'achat sur la base d'un résultat de l'identification du second produit.

8. Terminal (100 à 1000, 1200, 1302) de caisse en libre service selon l'une des revendications 1 à 7, comprenant en outre :
un dispositif (1006) de transaction financière, le dispositif (106) de commande étant en outre configuré pour faire effectuer une transaction financière en fonction des informations (204) de paiement par le dispositif (1006) de transaction financière.

9. Terminal (100 à 1000, 1200, 1302) de caisse en libre service selon l'une des revendications 1 à 8, comprenant en outre :
un dispositif (1008) d'affichage, le dispositif (106) de commande étant configuré pour afficher, via le dispositif (1008) d'affichage, une demande relative au second produit retiré du dispositif (104) de stockage de produits.

10. Terminal (100 à 1000, 1200, 1302) de caisse en libre service selon la revendication 9, la demande comprenant une demande d'approbation ou de désapprobation d'ajout des secondes informations (202b) d'achat à la liste (202) de produits à acheter.

11. Terminal (100 à 1000, 1200, 1302) de caisse en libre service selon la revendication 10, dans lequel le dispositif (106) de commande étant configuré pour suspendre un passage à la caisse en libre service, jusqu'à
la réception d'une ou de plusieurs entrées liées au second produit ;
la détermination, par le dispositif capteur (104s), du fait que le second produit est à nouveau ajouté au dispositif (104) de stockage de produits si l'invite est désapprouvée.

12. Terminal (100 à 1000, 1200, 1302) de caisse en libre service selon la revendication 11, comprenant en outre : un dispositif d'entrée d'utilisateur destiné à recevoir une ou plusieurs entrées pour approuver ou désapprouver l'ajout des secondes informations (202b) d'achat à la liste (202) de produits à acheter.

13. Procédé d'exploitation d'un terminal (100 à 1000, 1200, 1302) de caisse en libre service, le procédé comportant :
l'ajout (1105) de premières informations (202a) d'achat à une liste (202) de produits à acheter, lorsqu'un premier produit est scruté par un dispositif (102) de scrutation du terminal (100 à 1000, 1200, 1302) de caisse en libre service ;
le fait, pour un dispositif capteur (104s) du terminal (100 à 1000, 1200, 1302) de caisse en libre service, de déterminer (1103) si un second produit est retiré d'un dispositif (104) de stockage de produits du terminal (100 à 1000, 1200, 1302) de caisse en libre service ;
l'ajout (1113) de secondes informations (202b) d'achat à la liste (202) de produits à acheter, lorsque le second produit est retiré du dispositif (104) de stockage de produits ;
la détermination (1123) d'informations (204) de paiement sur la base de la liste (202) de produits à acheter
la détermination, au moyen d'un dispositif capteur supplémentaire (1002s), d'une zone (1002) de dépôt pour déposer les produits à acheter, si un produit parmi les produits à acheter est disposé dans la zone de dépôt ou retiré de celle-ci ;
le fait de déterminer (1115), si la liste (202) de produits à acheter est en accord avec un résultat de la détermination, si le produit est disposé dans la zone (1002) de dépôt ou retiré de celle-ci.

14. Support non transitoire lisible par ordinateur comprenant des instructions qui, lorsqu'elles sont exécutées par un ou plusieurs processeurs, mettent en œuvre le procédé selon la revendication 13.
